# EUROPÄISCHE PATENTSCHRIFT

(11) **EP 3 198 250 B1**
(45) Veröffentlichungstag und Bekanntmachung des Hinweises auf die Patenterteilung: **09.09.2020**
(21) Anmeldenummer: 15738949.5
(22) Anmeldetag: 24.07.2015
(51) Int. Cl.: G01L 19/14, H01R 13/506, H01R 13/66, H01R 12/71

(54) **STECKERGEHÄUSE FÜR EINE SENSORVORRICHTUNG UND STECKERMODUL**
PLUG HOUSING FOR A SENSOR DEVICE AND PLUG MODULE
BOÎTIER DE CONNECTEUR POUR UN DISPOSITIF DE DÉTECTION ET MODULE DE CONNECTEUR

(30) Priorität: 22.09.2014 DE 102014219030
(43) Veröffentlichungstag der Anmeldung: 02.08.2017
(73) Patentinhaber: Robert Bosch GmbH, 70442 Stuttgart (DE)
(72) Erfinder: SEITZ, Roland, 72147 Nehren (DE); LINDEMANN, Timo, 72074 Tuebingen (DE); WIRNITZER, Andreas, 70174Stuttgart (DE); WOERNLE, Wolfgang, 72149 Neustetten (DE)
(86) Internationale Anmeldenummer: PCT/EP2015/066956
(87) Internationale Veröffentlichungsnummer: WO 2016/045821

(56) Entgegenhaltungen:
- EP-A1- 1 096 241
- WO-A1-2009/153737
- WO-A2-2009/121426
- DE-A1-102013 208 534
- DE-A1-102013 208 537
- US-A- 5 834 638

## Beschreibung

Die Erfindung betrifft ein Steckergehäuse für eine Steckervorrichtung und ein Steckermodul.

### Stand der Technik

Die Schrift WO 2009/153737 A1 offenbart eine Drucksensoreinrichtung. Die einzelnen Komponenten der Drucksensoreinrichtung werden aufwendig montiert und miteinander verschweißt.

Die WO 2009/121426 A2 offenbart einen Wegbausensor mit einem Sensormodul, einem Gehäuse und wenigstens einem Kontaktelement des Sensormoduls, wobei das wenigstens eine Kontaktelement des Sensormoduls eine jeweilige elektrische Verbindung zu einem jeweiligen Kontaktelement des Gehäuses kraft- oder formschlüssig herstellt.

Heutige Drucksensoren, welche in einem Ansaugtrakt eines Verbrennungsmotors verbaut sind, sind Wegbausensoren in einem 2nd-Level-Gehäuse mit analoger oder digitaler Schnittstelle. Typischerweise bestehen die Sensoren aus einem Drucksensormodul, meistens bestehend aus einem Premold-Gehäuse, welches mehr oder weniger aufwendig in das 2nd-Level-Gehäuse eingelötet oder eingeschweißt wird. Die notwendigen passiven Bauteile wie z.B. Stützkondensatoren werden entweder an das Premold-Modul angeklebt oder im 2nd-Level-Gehäuse verbaut.

Zusätzlich wird ein NTC-Fühler für die Temperaturmessung verbaut. Dieser wird bei der analogen Variante über den Stecker direkt nach außen geführt. Bei der digitalen Variante wird der NTC-Fühler an eine anwendungsspezifische integrierte Schaltung zum Zwecke der Auswertung angeschlossen.

Zur Gewährleistung einer Medienbeständigkeit werden alle offenen elektrischen Kontakte wie z.B. Premold, NTC und Kondensatoren mit einer geeigneten Dichtmasse versehen, um eine Korrosion zu verhindern. Um die Medienanforderungen der Drucksensoranwendungen zu erfüllen, werden das Sensorelement, die anwendungsspezifische integrierte Schaltung zur Auswertung und die Drahtbonds im Drucksensormodul typischerweise durch eine, das korrosive Medium neutralisiernde, Dichtmasse geschützt.

Die Verbindung der unterschiedlichen Komponenten im Gehäuse in Kombination mit den unterschiedlichen Steckern machen üblicherweise komplexe Einlegeteile in den Kunststoff-Gehäuseteilen erforderlich. Unterschiedliche Kundenanforderungen bezüglich Stecker- oder Stutzen-Geometrien führen dazu, dass diese vergleichsweise teuren Gehäuseteile für jede Variante aufwändig hergestellt werden müssen.
Die DE 10 2012 223 014 A1 offenbart eine Vorrichtung zur Erfassung des Drucks und der Temperatur eines Mediums. Die Vorrichtung weist einen in einem gemeinsamen Gehäuse angeordneten Temperatursensor und Drucksensor auf, wobei das Gehäuse weiterhin einen Messraum umfasst. Der Messraum ist über einen Druckstutzen mit einem das Medium aufnehmenden Raum verbunden, wobei der Drucksensor in dem Messraum angeordnet ist. Ferner weist der Temperatursensor Anschlussleitungen auf. In dem Gehäuse sind zur Kontaktierung der Anschlussleitungen des Temperatursensors entsprechende Anschlusskontakte vorgesehen. Weiterhin ist zur Aufnahme des Temperatursensors in dem Gehäuse wenigstens eine in den Druckstutzen mündende konische Durchführung angeordnet, wobei sich die konische Durchführung zum Druckstutzen hin erweitert. Ebenso ist es vorgesehen, dass in der konischen Durchführung wenigstens abschnittsweise eine die Anschlussleitungen des Temperatursensors umschließende Dichtmasse eingebracht ist.

### Offenbarung der Erfindung

Die vorliegende Erfindung schafft ein Steckermodul mit einem Steckergehäuse für eine Sensorvorrichtung mit einem Stutzen, welcher an einer Innenseite einen Aufnahmebereich zur Aufnahme der Sensorvorrichtung aufweist, und einen Deckel, welcher an dem Stutzen mittels einer Befestigungsvorrichtung verbunden ist, wobei eine Mehrzahl von gerade ausgebildeten, elektrisch leitfähigen Kontaktstiften derart in den Deckel eingebracht sind, dass jeweilige erste Enden der Kontaktstifte in ein Innenvolumen des Steckergehäuses hineinragen und über dem Aufnahmebereich des Stutzens angeordnet sind, und jeweilige zweite Enden der Kontaktstifte im Bereich einer Anschlussbuchse des Deckels angeordnet sind, nach dem unabhängigen Anspruch 1.

Eine Idee der vorliegenden Erfindung ist es, einen Drucksensor mit Direktkontaktierung auf dem Sensormodul zu realisieren, wobei eine Mehrzahl kostenreduzierender Elemente eingesetzt werden. Durch das Verwenden von einfachen, geraden Kontaktstiften, die nachträglich in den Gehäusedeckel eingebracht werden, können komplexe Einlegeteile vermieden werden. Dadurch werden die Kosten des Steckergehäuses signifikant gesenkt. Außerdem ist die Herstellung des Steckergehäuses ohne Einlegeteile deutlich einfacher.

Die vorliegende Erfindung ermöglicht es zudem, auch eine Sensorvorrichtung mit einer Mehrzahl von Kontaktstiften durch einfache Kaltkontaktierung zu kontaktieren, ohne dass das System mechanisch überbestimmt ist. Damit ist eine sehr einfache Endmontage gewährleistet.

Mit der vorliegenden Erfindung sind sowohl Deckel- als auch Stutzenvarianten einfacher darstellbar, da man beide Gehäuseteile mehrfach verwenden und kombinieren kann. Das Variantenmanagement wird somit deutlich vereinfacht. Durch die gerade ausgebildeten, elektrisch leitfähigen Kontaktstifte kann eine zuverlässige elektrische Kontaktierung der Sensorvorrichtung ermöglicht werden.

Vorteilhafte Ausführungsformen und Weiterbildungen ergeben sich aus den Unteransprüchen sowie aus der Beschreibung unter Bezugnahme auf die Figuren.

Es ist vorgesehen, dass die Mehrzahl von Kontaktstiften in den Deckel eingeschossen, in einem vorbestimmten lateralen Abstand parallel zueinander angeordnet sind, und zumindest drei Kontaktstifte aufweisen. Dadurch kann eine zuverlässige elektrische Kontaktierung von mehreren Kontakten bzw. Kontaktflächen der Sensorvorrichtung durch die Mehrzahl von Kontaktstiften ermöglicht werden.

Es ist ferner vorgesehen, dass die Mehrzahl von Kontaktstiften federelastisch ausgebildet sind. Somit kann eine Kontaktierung der elektrischen Kontakte der Sensorvorrichtung durch Anpressen der Mehrzahl von Kontaktstiften an die elektrischen Kontakte der Sensorvorrichtung ermöglicht werden. Die Eigenfederung der Kontaktstifte dient dabei dem Toleranzausgleich der Kontaktstifte. Die Nachgiebigkeit der geraden Kontaktstifte macht somit zusätzliche Federelemente an der Sensorvorrichtung oder im Steckergehäuse unnötig. Das Prinzip ermöglicht den Einsatz einer etablierten, kostengünstigen Sensorvorrichtung. Dies weist den Vorteil der Möglichkeit auf, sämtliche passiven Bauteile zu integrieren. In diesem Fall sind keine weiteren passiven Bauteile im 2nd-Level-Gehäuse zu berücksichtigen. Des Weiteren kann eine kompakte Bauweise des Steckergehäuses bei gleichzeitig großem Nutzen ermöglicht werden. Überdies kann die anwendungsspezifische integrierte Schaltung mit umspritzt werden. Somit ist kein zusätzlicher Medienschutz der anwendungsspezifischen integrierten Schaltung notwendig.

Es ist ferner vorgesehen, dass die Befestigungsvorrichtung durch eine Rastvorrichtung oder Klemmvorrichtung ausgebildet ist. Somit ist eine einfache und zuverlässige Befestigung des Deckels an dem Stutzen des Steckergehäuses möglich.

Die Rastvorrichtung weist an dem Deckel angeordnete federelastische Rastbügel auf, welche in an dem Stutzen angeordnete, zugeordnete Rastnasen eingreifen. Damit kann eine zuverlässige Verbindung zwischen Deckel und Stutzen des Steckergehäuses vorgesehen werden.

Es ist ferner vorgesehen, dass die federelastischen Rastbügel an einem, an einer dem Stutzen zugewandten Seite des Deckels ausgebildeten umlaufenden Rand angeordnet sind. Durch die Platzierung der Rastbügel an dem umlaufenden Rand des Deckels kann eine sichere und zuverlässige Befestigung des Deckels am Stutzen gewährleistet werden.

Es ist ferner vorgesehen, dass die Mehrzahl von Kontaktstiften derart in den Deckel eingebracht sind, dass diese an die jeweiligen elektrischen Kontakte der Sensorvorrichtung angepresst sind. Somit kann eine zuverlässige elektrische Kontaktierung der Mehrzahl von Kontaktstiften an den jeweiligen Kontakten der Sensorvorrichtung ermöglicht werden.
Gemäß einem weiteren bevorzugten Ausführungsbeispiel ist vorgesehen, dass ein an die Anschlussbuchse anschließbarer Stecker mit der Sensorvorrichtung über die Mehrzahl von elektrisch leitfähigen Kontaktstiften und deren jeweils zugeordnete elektrische Kontakte der Sensorvorrichtung elektrisch verbunden ist. Somit kann eine einfache und sichere elektrische Verbindung von Stecker zu Sensorvorrichtung bei gleichzeitig kompakter Bauweise des Steckermoduls ermöglicht werden.
Gemäß einer weiteren bevorzugten Ausgestaltung ist vorgesehen, dass die Sensorvorrichtung zur Messung eines Drucks ausgebildet ist, druckfest und luftdicht auf dem Stutzen verklebt ist, und eine Druckzufuhr der Sensorvorrichtung an einer zum Stutzen benachbarten Unterseite der Sensorvorrichtung angeordnet ist. Durch die Dichtklebung erfolgt in vorteilhafter Weise die Medientrennung zwischen Druckzufuhr und Gehäuseinnenraum.

Es ist ferner vorgesehen, dass an die Sensorvorrichtung ein Temperaturfühler angebunden ist, wobei der Temperaturfühler durch einen Heißleiter ausgebildet ist. Ein separat hergestelltes Heißleiter-Modul erlaubt es, den Temperaturfühler sehr einfach in das 2nd-Level-Gehäuse zu integrieren. Es ist somit keine weitere Kontaktierung oder Abdichtung notwendig.

Der Temperaturfühler ist mit Kunststoff umspritzt, in dem Stutzen montiert und heißverstemmt, wobei der Temperaturfühler eine Mehrzahl von elektrisch leitfähigen Kontaktbügeln aufweist, welche jeweilige elektrische Kontakte der Sensorvorrichtung kontaktieren. Somit kann der mit Kunststoff zu einem Temperaturfühler-Modul umspritzte Temperaturfühler in einfacher Art und Weise in den Stutzen eingefügt bzw. in diesem befestigt werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine perspektivische Ansicht eines erfindungsgemäßen Steckergehäuses gemäß einer bevorzugten Ausführungsform der Erfindung;
- Fig. 2: eine perspektivische Ansicht des erfindungsgemäßen Steckergehäuses mit montierter Sensorvorrichtung und angebundenem Temperaturfühler gemäß der bevorzugten Ausführungsform der Erfindung;
- Fig. 3: eine perspektivische Ansicht eines Temperaturfühler-Moduls des erfindungsgemäßen Steckergehäuses gemäß der bevorzugten Ausführungsform der Erfindung; und
- Fig. 4: eine perspektivische Ansicht eines Deckels des erfindungsgemäßen Steckergehäuses gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

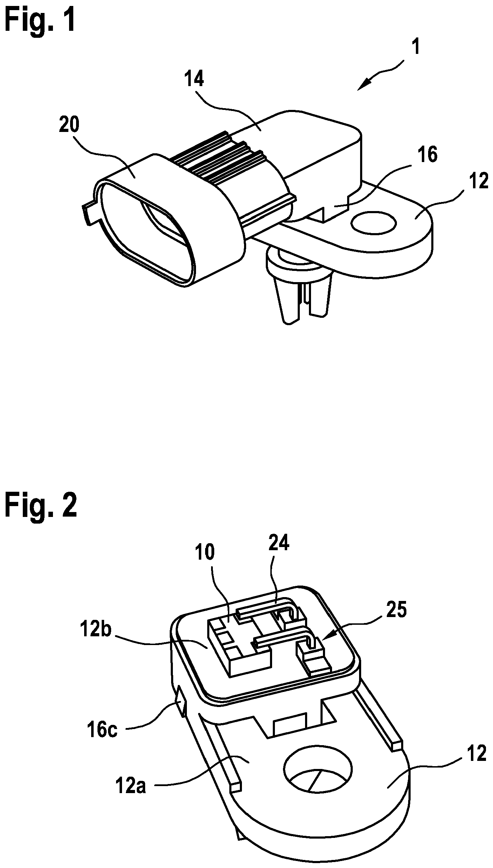

Fig. 1 zeigt eine perspektivische Ansicht eines erfindungsgemäßen Steckergehäuses gemäß einer bevorzugten Ausführungsform der Erfindung.

Das Steckergehäuse 1 für die Sensorvorrichtung 10 weist einen Stutzen 12 und einen Deckel 14 auf, welcher an dem Stutzen mittels einer Befestigungsvorrichtung 16 verbunden ist. Der Deckel 14 weist des Weiteren eine Anschlussbuchse 20 zum Anschluss eines Steckers auf. Die Befestigungsvorrichtung 16 ist vorzugsweise durch eine Rastvorrichtung ausgebildet. Alternativ kann die Befestigungsvorrichtung 16 auch beispielsweise durch eine Klemmvorrichtung ausgebildet sein.

Ein an die Anschlussbuchse 20 anschließbarer Stecker ist mit der Sensorvorrichtung 10 über eine Mehrzahl von (in Fig. 1 nicht gezeigten) elektrisch leitfähigen Kontaktstiften 18 und deren jeweils zugeordnete elektrische Kontakte der Sensorvorrichtung 10 elektrisch verbunden.

Fig. 2 zeigt eine perspektivische Ansicht des erfindungsgemäßen Steckergehäuses mit montierter Sensorvorrichtung und angebundenem Temperaturfühler gemäß der bevorzugten Ausführungsform der Erfindung.

Der Stutzen 12 weist an einer Innenseite 12a einen Aufnahmebereich 12b zur Aufnahme der Sensorvorrichtung 10 auf. Die Sensorvorrichtung 10 ist in dem Aufnahmebereich 12b mit dem Stutzen 12 vorzugsweise verklebt. Alternativ kann die Sensorvorrichtung 10 auch in anderer geeigneter Weise am Stutzen 12 befestigt sein.

Im Bereich einer Seitenwand des Stutzens 12 ist des Weiteren eine Rastnase 16c der Befestigungsvorrichtung 16 gezeigt. Die Befestigungsvorrichtung 16 weist im vorliegenden Ausführungsbeispiel an dem Deckel 14 angeordnete (in Fig. 2 nicht gezeigte) federelastische Rastbügel 16a auf, welche in an dem Stutzen 12 angeordnete, zugeordnete Rastnasen 16c eingreifen. Des Weiteren ist das Temperaturfühler-Modul 25 in den Stutzen 12 eingesetzt. Das Temperaturfühler-Modul 25 weist einen (in Fig. 2 nicht gezeigten) Temperaturfühler 22 auf. Eine Kontaktierung der Sensorvorrichtung 10 durch den Temperaturfühler 22 erfolgt über ein Paar von in dem Temperaturfühler-Modul 25 integrierten elektrisch leitfähigen Kontaktbügeln 24.

Die Sensorvorrichtung 10 ist zur Messung eines Drucks ausgebildet, druckfest und luftdicht auf dem Stutzen 12 verklebt, und eine Druckzufuhr der Sensorvorrichtung 10 ist vorzugsweise an einer zum Stutzen 12 benachbarten Unterseite der Sensorvorrichtung 10 angeordnet.

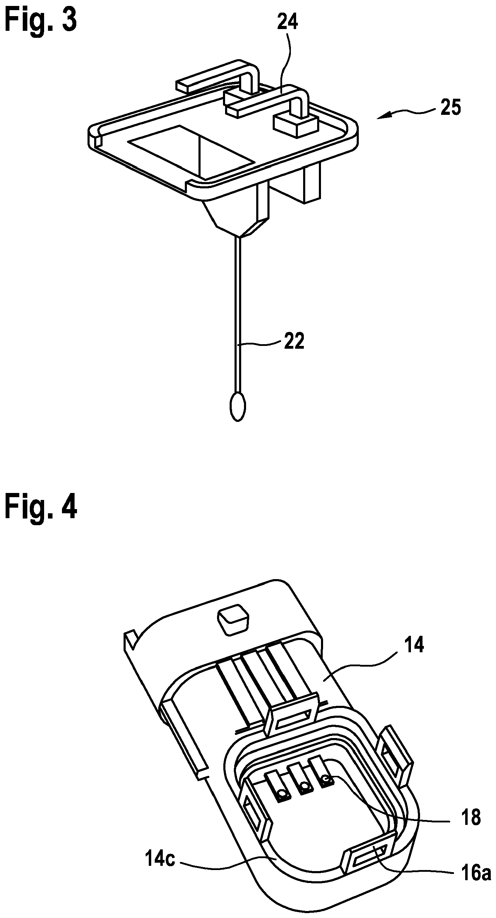

Fig. 3 zeigt eine perspektivische Ansicht eines Temperaturfühler-Moduls des erfindungsgemäßen Steckergehäuses gemäß der bevorzugten Ausführungsform der Erfindung.

Das Temperaturfühler-Modul 25 weist den Temperaturfühler 22 auf, welcher vorzugsweise durch einen Heißleiter bzw. NTC-Widerstand ausgebildet ist. Der Temperaturfühler 22 ist mit einem Kunststoffgehäuse umspritzt. Das Temperaturfühler-Modul 25 weist des Weiteren Kontaktbügel 24 zur Kontaktierung der Sensorvorrichtung 10 auf. Das Temperaturfühler-Modul 25 kann somit in den Stutzen 12 eingesetzt und durch Heißverstemmen befestigt werden.

Die für die Durchführung des Temperaturfühlers 22 durch den Stutzen 12 notwendige Medientrennung erfolgt vorzugsweise durch eine dichte Umspritzung der Kontakte des Temperaturfühlers 22 im Temperaturfühler-Modul und die Klebung des Temperaturfühler-Moduls in den Stutzen 12. Alternativ ist die direkte Anbindung des Temperaturfühlers 22 auf einer Rückseite des Temperaturfühler-Moduls 25 möglich. In diesem Fall erfolgt ein Einsetzen des Temperaturfühlers 22 von oben in den Stutzen 12 und eine anschließende Kontaktierung auf den jeweiligen Kontakten der Sensorvorrichtung 10 ohne vorheriges Umspritzen des Temperaturfühlers. Die Kontaktierung der Kontakte der Sensorvorrichtung 10 durch den Temperaturfühler 22 erfolgt vorzugsweise durch Löten. Alternativ kann die Kontaktierung auch durch Schweißen oder Leitkleben erfolgen.

Fig. 4 zeigt eine perspektivische Ansicht eines Deckels des erfindungsgemäßen Steckergehäuses gemäß der bevorzugten Ausführungsform der Erfindung.

Der Deckel 14 weist gemäß der vorliegenden Ausführungsform drei Kontaktstifte 18 auf, welche in den Deckel 14 eingeschossen, in einem vorbestimmten lateralen Abstand parallel zueinander angeordnet und federelastisch ausgebildet sind. Die am Deckel 14 angeordnete Rastvorrichtung weist eine Mehrzahl von federelastischen Rastbügeln 16a auf, welche an einem, an einer dem Stutzen 12 zugewandten Seite des Deckels 14 ausgebildeten umlaufenden Rand 14c angeordnet sind.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Gemäß der bevorzugten Ausführungsformen der Erfindung wurde eine digitale Variante der Sensorvorrichtung in Form eines Drucksensors beschrieben. Alternativ kann auch eine analoge Variante der Sensorvorrichtung 10 vorgesehen werden. Zur Realisierung der analogen Drucksensorvariante ist es erforderlich, das analoge NTC-Signal direkt nach außen auf den Stecker zu führen. Diese elektrische Anbindung des NTC-Signals kann entweder über ein hierfür ausgelegtes Pad auf einer Kontaktierungsseite der Sensorvorrichtung 10 realisiert werden, welches den Kontakt zum Stecker-Pin bzw. Kontaktstift ermöglicht, oder eine direkte Anbindung des NTC-Kontakts an dem Stecker-Pin durch z.B. Schweißen, Löten, eine Schneid-Klemm-Verbindung oder Leitkleben.

## Patentansprüche

1. Steckermodul mit:
einem Steckergehäuse (1) mit:
einem Stutzen (12), welcher an einer Innenseite (12a) einen Aufnahmebereich (12b) aufweist; und
mit einer Sensorvorrichtung (10), welche in dem Aufnahmebereich (12b) des Stutzens (12) angeordnet ist,
einem Deckel (14), welcher an dem Stutzen (12) mittels einer Befestigungsvorrichtung (16) verbunden ist, wobei eine Mehrzahl von gerade ausgebildeten, elektrisch leitfähigen und federelastischen Kontaktstiften (18) derart in den Deckel (14) eingeschossen sind, dass jeweilige erste Enden der Kontaktstifte (18) in ein Innenvolumen des Steckergehäuses (1) hineinragen und über dem Aufnahmebereich (12b) des Stutzens (12) angeordnet sind, und jeweilige zweite Enden der Kontaktstifte (18) im Bereich einer Anschlussbuchse (20) des Deckels angeordnet sind,
wobei die Kontaktstiften (18) in einem vorbestimmten lateralen Abstand parallel zueinander angeordnet sind,
wobei die Befestigungsvorrichtung (16) durch eine Rastvorrichtung ausgebildet ist;
wobei die Rastvorrichtung an dem Deckel (14) angeordnete federelastische Rastbügel (16a) aufweist, welche in an dem Stutzen (12) angeordnete, zugeordnete Rastnasen (16c) eingreifen,
wobei die federelastischen Rastbügel (16a) an einem, an einer dem Stutzen (12) zugewandten Seite des Deckels (14) ausgebildeten umlaufenden Rand (14c) angeordnet sind; und
wobei die Mehrzahl von gerade ausgebildeten, parallel zueinander angeordneten federelastischen Kontaktstiften (18) jeweilige elektrische Kontaktflächen der Sensorvorrichtung (10) unmittelbar kontaktieren; und
wobei die Mehrzahl von Kontaktstiften (18) derart in den Deckel (14) eingebracht ist, dass diese an die jeweiligen elektrischen Kontakte der Sensorvorrichtung (10) angepresst sind,
wobei an die Sensorvorrichtung (10) ein Temperaturfühler (22) angebunden ist, wobei der Temperaturfühler (22) durch einen Heißleiter ausgebildet ist, wobei der Temperaturfühler (22) mit Kunststoff umspritzt, in dem Stutzen (12) montiert und heißverstemmt ist, wobei der Temperaturfühler (22) eine Mehrzahl von elektrisch leitfähigen Kontaktbügeln (24) aufweist, welche jeweilige elektrische Kontakte (10b) der Sensorvorrichtung (10) kontaktieren.

2. Steckermodul nach Anspruch 1, **dadurch gekennzeichnet, dass** ein an die Anschlussbuchse (20) anschließbarer Stecker mit der Sensorvorrichtung (10) über die Mehrzahl von elektrisch leitfähigen Kontaktstiften (18) und deren jeweils zugeordnete elektrische Kontakte der Sensorvorrichtung (10) elektrisch verbunden ist.

3. Steckermodul nach einem der Ansprüche 1 oder 2, **dadurch gekennzeichnet, dass** die Sensorvorrichtung (10) zur Messung eines Drucks ausgebildet ist, druckfest und luftdicht auf dem Stutzen (12) verklebt ist, und eine Druckzufuhr der Sensorvorrichtung (10) an einer zum Stutzen (12) benachbarten Unterseite der Sensorvorrichtung (10) angeordnet ist.

## Claims

1. Plug module comprising:
a plug housing (1) comprising:
a connection piece (12) which has a receiving region (12b) on an inner side (12a); and
comprising a sensor apparatus (10) which is arranged in the receiving region (12b) of the connection piece (12), a cover (14) which is connected to the connection piece (12) by means of a fastening apparatus (16), wherein a plurality of straight, electrically conductive and spring-elastic contact pins (18) are incorporated in the cover (14) in such a way that respective first ends of the contact pins (18) protrude into an inner volume of the plug housing (1) and are arranged above the receiving region (12b) of the connection piece (12), and respective second ends of the contact pins (18) are arranged in the region of a connection bushing (20) of the cover,
wherein the contact pins (18) are arranged at a predetermined lateral distance parallel to one another,
wherein the fastening apparatus (16) is formed by a latching apparatus;
wherein the latching apparatus has spring-elastic latching clips (16a) which are arranged on the cover (14) and engage into associated latching lugs (16c) which are arranged on the connection piece (12),
wherein the spring-elastic latching clips (16a) are arranged on an encircling edge (14c) which is formed on a side of the cover (14) which faces the connection piece (12); and
wherein the plurality of straight, spring-elastic contact pins (18) which are arranged parallel to one another make direct contact with the respective electrical contact areas of the sensor apparatus (10); and
wherein the plurality of contact pins (18) are inserted into the cover (14) in such a way that they are pressed against the respective electrical contacts of the sensor apparatus (10),
wherein a temperature sensor (22) is attached to the sensor apparatus (10), wherein the temperature sensor (22) is formed by a heat conductor, wherein the temperature sensor (22) is encapsulated by injection moulding with plastic, fitted in the connection piece (12) and hot-caulked, wherein the temperature sensor (22) has a plurality of electrically conductive contact clips (24) which make contact with respective electrical contacts (10b) of the sensor apparatus (10).

2. Plug module according to Claim 1, **characterized in that** a plug which can be connected to the connection bushing (20) is electrically connected to the sensor apparatus (10) by means of the plurality of electrically conductive contact pins (18) and the electrical contacts of the sensor apparatus (10) which are respectively associated with the said contact pins.

3. Plug module according to either of Claims 1 and 2, **characterized in that** the sensor apparatus (10) is designed for measuring a pressure, is adhesively bonded to the connection piece (12) in a pressure-resistant and air-tight manner, and a pressure supply of the sensor apparatus (10) is arranged on a bottom side of the sensor apparatus (10), which bottom side is adjacent to the connection piece (12).

## Revendications

1. Module de fiche, comprenant :
un boîtier de fiche (1) comprenant :
un embout (12) qui possède une zone d'accueil (12b) sur un côté intérieur (12a) ; et
comprenant un dispositif détecteur (10) qui est disposé dans la zone d'accueil (12b) de l'embout (12),
un couvercle (14) qui est relié à l'embout (12) au moyen d'un dispositif de fixation (16), une pluralité de broches de contact (18) de configuration droite, électriquement conductrices et à élasticité de ressort sont insérées dans le couvercle (14) de telle sorte que des premières extrémités respectives des broches de contact (18) font saillie dans un volume intérieur du boîtier de fiche (1) et sont disposées au-dessus de la zone d'accueil (12b) de l'embout (12), et des deuxièmes extrémités respectives des broches de contact (18) sont disposées dans la zone d'une douille de raccordement (20) du couvercle,
les broches de contact (18) étant disposées parallèlement les unes aux autres à un écart latéral prédéterminé,
le dispositif de fixation (16) étant formé par un dispositif d'encliquetage,
le dispositif d'encliquetage possédant des étriers d'encliquetage (16a) à élasticité de ressort disposés sur le couvercle (14), qui viennent en prise dans des tenons d'encliquetage (16c) associés disposés sur l'embout (12), les étriers d'encliquetage (16a) à élasticité de ressort étant disposés sur un bord (14c) périphérique formé sur un côté du couvercle (14) qui fait face à l'embout (12) ; et
la pluralité de broches de contact (18) de configuration droite à élasticité de ressort disposées parallèlement les unes aux autres venant en contact direct avec des surfaces de contact électriques respectives du dispositif détecteur (10) ; et
la pluralité de broches de contact (18) étant introduites dans le couvercle (14) de telle sorte que celui-ci est pressé contre les contacts électriques respectifs du dispositif détecteur (10),
une sonde de température (22) étant raccordée au dispositif détecteur (10), la sonde de température (22) étant formée par une thermistance, la sonde de température (22) étant enrobée de matière plastique, montée dans l'embout (12) puis matée à chaud, la sonde de température (22) possédant une pluralité d'étriers de contact (24) électriquement conducteurs qui entrent en contact avec les contacts électriques (10b) respectifs du dispositif détecteur (10).

2. Module de fiche selon la revendication 1, **caractérisé en ce qu'**une fiche qui peut être raccordée à la douille de raccordement (20) est reliée électriquement au dispositif détecteur (10) par le biais de la pluralité de broches de contact (18) électriquement conductrices et leurs contacts électriques respectivement associés du dispositif détecteur (10).

3. Module de fiche selon la revendication 1 ou 2, **caractérisé en ce que** le dispositif détecteur (10) est configuré pour mesurer une pression, est collé sur l'embout (12) de manière résistante à la pression et hermétique à l'air, et une arrivée de pression du dispositif détecteur (10) est disposée au niveau d'un côté inférieur du dispositif détecteur (10) voisin de l'embout (12).
